# EUROPEAN PATENT APPLICATION

(11) **EP 4 734 380 A1**
(43) Date of publication of application: **29.04.2026**
(21) Application number: 24843507.5
(22) Date of filing: 17.07.2024
(51) Int. Cl.: H04B 1/401, H04B 1/04, H04B 1/18, H04B 17/10, H04B 17/20, H04W 84/12, H04W 88/06, H04B 7/06, H04B 7/08, H04W 72/12

(54) **ELECTRONIC DEVICE FOR MATCHING IMPEDANCE OF ANTENNA AND OPERATING METHOD THEREOF**

(30) Priority: 20.07.2023 KR 20230094486; 15.11.2023 KR 20230158271
(71) Applicant: Samsung Electronics Co., Ltd., Suwon-si, Gyeonggi-do 16677 (KR)
(72) Inventor: KIM, Sungsoo, Suwon-si, Gyeonggi-do 16677 (KR); KANG, Euisung, Suwon-si, Gyeonggi-do 16677 (KR); KIM, Byungjoon, Suwon-si, Gyeonggi-do 16677 (KR); KIM, Yongyoun, Suwon-si, Gyeonggi-do 16677 (KR); KIM, Changmin, Suwon-si, Gyeonggi-do 16677 (KR); RYOO, Kanghyun, Suwon-si, Gyeonggi-do 16677 (KR); CHO, Youngsang, Suwon-si, Gyeonggi-do 16677 (KR); CHU, Duho, Suwon-si, Gyeonggi-do 16677 (KR)
(74) Representative: Nederlandsch Octrooibureau
(86) International application number: PCT/KR2024/010281
(87) International publication number: WO 2025/018792

(57) **Abstract**

An embodiment of the present disclosure relates to an apparatus and method for matching impedance of an antenna in an electronic device. The electronic device includes: a first antenna and a second antenna; a communication processor for supporting cellular communication through the first antenna; and an application processor for supporting wireless LAN communication through the second antenna, wherein the communication processor may, when the cellular communication and the wireless LAN communication are activated, check an operating state of the cellular communication and an operating state of the wireless LAN communication and match impedance of at least one of the first antenna or the second antenna on the basis of the operating state of the cellular communication and the operating state of the wireless LAN communication. Various other embodiments may also be possible.

## Description

### [Technical Field]

An embodiment of the disclosure relates to a device and method for matching impedance of an antenna in an electronic device.

### [Background Art]

An electronic device may communicate with an external electronic device by using one wireless communication technology. For example, the wireless communication technology may include at least one of ultra-wideband (UWB) communication, wireless LAN (e.g., Wi-Fi) communication, long-term evolution (LTE) communication, 5G communication (or new radio (NR) communication), or Bluetooth communication (or Bluetooth low energy (BLE)). To support such wireless communication technologies, multiple antenna structures (e.g., antennas or antenna modules) may be arranged in the electronic device. For example, an improved arrangement design for the multiple antenna structures may be considered for slimming the electronic device.

The above information may be provided as related art to aid in understanding of the disclosure. No claim or determination is made as to whether any of the above constitutes prior art related to the disclosure.

### [Disclosure of Invention]

### [Solution to Problem]

An electronic device may include at least one antenna (e.g., an antenna structure or an antenna module). The at least one antenna may include a legacy antenna operating in a frequency band of approximately 600 MHz to 6000 MHz, a 5G antenna operating in a frequency band of approximately 3 GHz to 300 GHz, or a wireless LAN antenna for wireless LAN communication (e.g., Wi-Fi).

The electronic device may match the impedance of an antenna to improve the transmission efficiency of the antenna. The impedance matching of an antenna may include a series of operations for matching the impedance of the antenna, which varies depending on various radio environments or the usage environment of the electronic device, to a characteristic impedance, thereby enabling maximum power transfer via the antenna.

When the legacy antenna and the wireless LAN antenna are positioned adjacent to each other, the electronic device may match the impedance of the antennas to improve transmission efficiency. However, when the impedance of at least one of the legacy antenna and the wireless LAN antenna is matched based on wireless communication using the legacy antenna, the performance of the wireless LAN communication may deteriorate.

Embodiments of the disclosure relate to a device and a method for matching the impedance of an antenna in an electronic device.

The technical objectives to be achieved by the disclosure are not limited to those mentioned above, and other technical objectives not specifically described will be apparent to those skilled in the art to which the disclosure pertains from the following description.

According to an embodiment, an electronic device may include a first antenna, a second antenna, a communication processor configured to support cellular communication in a designated frequency band via the first antenna, an application processor configured to support wireless LAN communication in at least a portion of a designated frequency band via the second antenna, and a memory operatively connected to the communication processor and the application processor. According to an embodiment, the memory may store instructions that, when executed by at least one of the communication processor or the application processor, cause the electronic device to identify an operation state of the cellular communication and an operation state of the wireless LAN communication when both the cellular communication and the wireless LAN communication are activated. According to an embodiment, the memory may store instructions that, when executed by at least one of the communication processor or the application processor, cause the electronic device to match an impedance of at least one of the first antenna or the second antenna, based on the operation state of the cellular communication and the operation state of the wireless LAN communication.

According to an embodiment, a method of operating an electronic device including an application processor configured to support cellular communication via a first antenna and a communication processor configured to support wireless LAN communication via a second antenna may include, when both the cellular communication and the wireless LAN communication are activated, identifying by the communication processor, an operation state of the cellular communication and an operation state of the wireless LAN communication. According to an embodiment, the method of operating the electronic device may include matching, by the communication processor, an impedance of at least one of the first antenna or the second antenna, based on the operation state of the cellular communication and the operation state of the wireless LAN communication.

According to an embodiment, a non-transitory computer-readable storage medium (or a computer program product) storing one or more programs may be provided. According to an embodiment, the one or more programs may include instructions which, when executed by a communication processor of an electronic device, cause a communication processor to identify an operation state of cellular communication and an operation state of wireless LAN communication when both the cellular communication and the wireless LAN communication are activated, and match an impedance of at least one of a first antenna related to the cellular communication or a second antenna related to the wireless LAN communication, based on the operation state of the cellular communication and the operation state of the wireless LAN communication.

According to exemplary embodiments of the disclosure, an electronic device may increase transmission efficiency (or transmission performance) of an antenna for both wireless LAN communication and cellular communication by matching an impedance of the antenna, based on operation state information of the wireless LAN communication and operation state information of the cellular communication when physically adjacent antennas are used or when a single antenna is shared.

According to an embodiment, an electronic device may increase the transmission efficiency (or transmission performance) of an antenna for wireless LAN communication and cellular communication by defining at least one tuning code among tuning codes corresponding to an impedance associated with the cellular communication to correspond to the wireless LAN communication.

In addition, various effects that are directly or indirectly understood through the disclosure may be provided.

The effects obtainable from the disclosure are not limited to the effects mentioned above, and other effects not explicitly mentioned will be clearly understood by those skilled in the art from the following description.

### [Brief Description of Drawings]

In relation to the description of the drawings, the same or similar reference numerals may be used for the same or similar components.
FIG. 1 is a block diagram of an electronic device in a network environment according to an embodiment.
FIG. 2A illustrates the front of an electronic device in an unfolded state according to an embodiment.
FIG. 2B illustrates the rear of an electronic device in an unfolded state according to an embodiment.
FIG. 3A illustrates one side of an electronic device in a folded state according to an embodiment.
FIG. 3B illustrates the other side of the electronic device in a folded state according to an embodiment.
FIG. 4A is a block diagram of an electronic device including multiple antennas physically adjacent to each other according to an embodiment.
FIG. 4B is a block diagram of an electronic device in which multiple communication schemes share an antenna according to an embodiment.
FIG. 5 is a flowchart illustrating a process of sharing operation state information of second wireless communication in an electronic device according to an embodiment.
FIG. 6 is a flowchart illustrating a process of matching impedance of an antenna in an electronic device according to an embodiment.
FIG. 7 is a flowchart illustrating a process of matching impedance of an antenna, based on an operation state of wireless communication in an electronic device according to an embodiment.

### [Mode for the Invention]

Hereinafter, embodiments will be described in detail reference to the attached drawings.

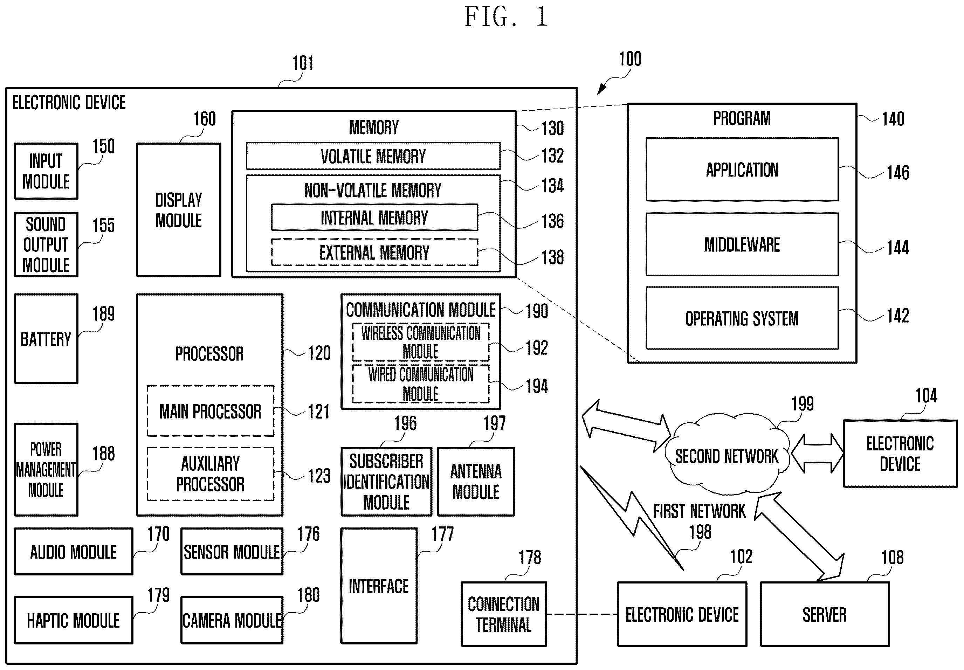

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to one embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form high frequency (e.g., a mmWave) antenna module. According to an embodiment, the high frequency (e.g., the mmWave) antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas. For example, the plural antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

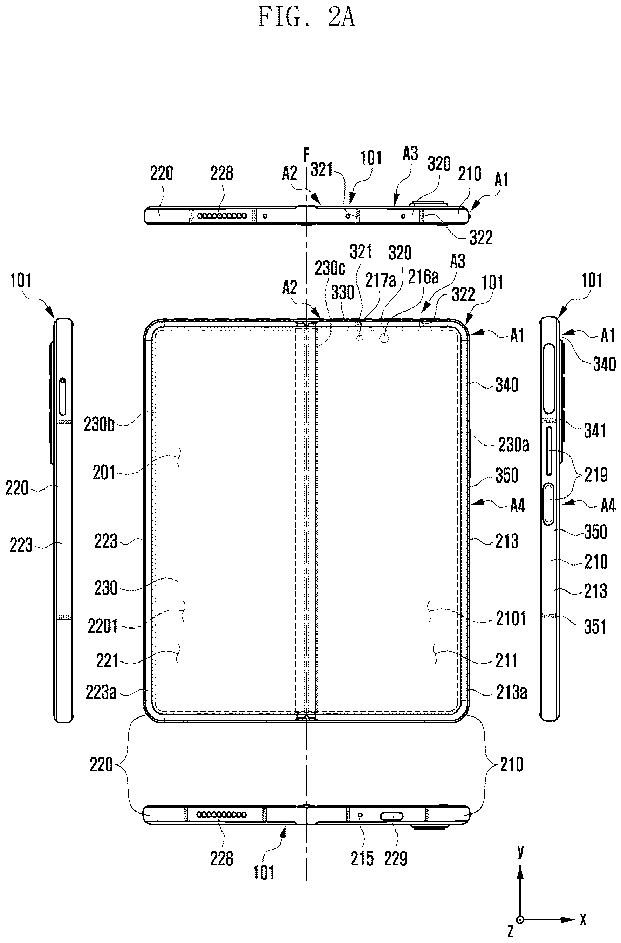

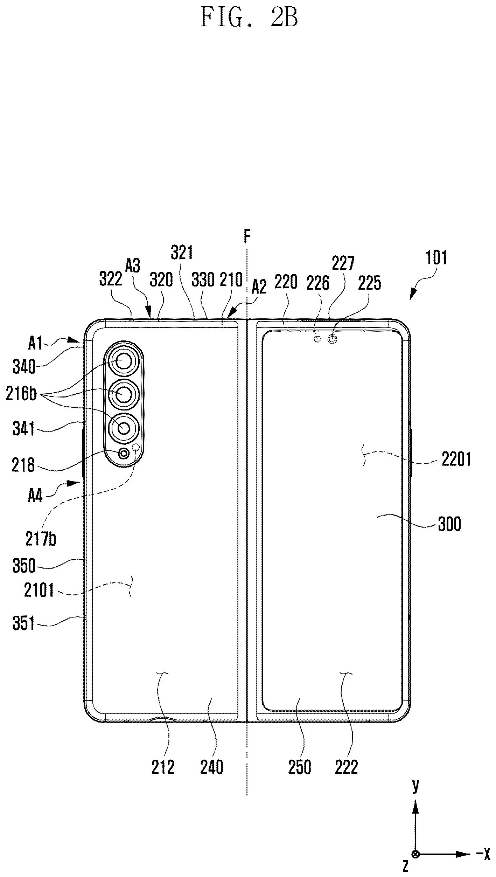

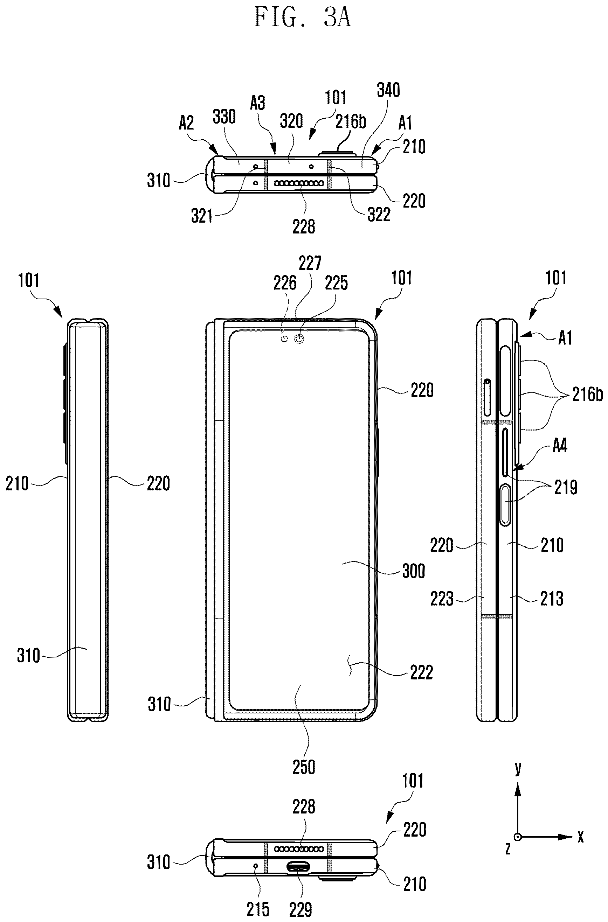

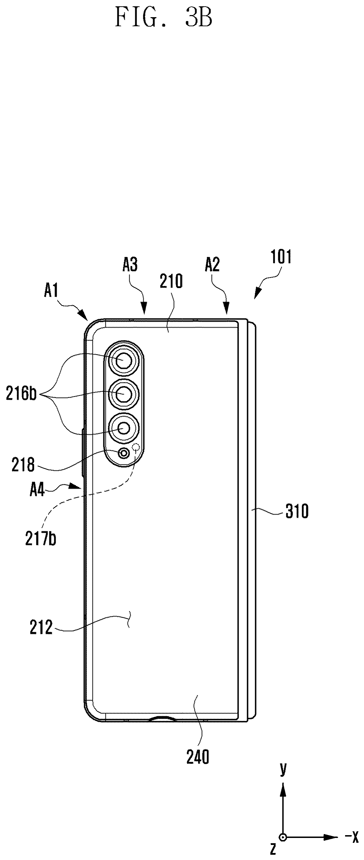

FIG. 2A illustrates the front of an electronic device in an unfolded state according to an embodiment. FIG. 2B illustrates the rear of an electronic device in an unfolded state according to an embodiment. FIG. 3A illustrates one side of an electronic device in a folded state according to an embodiment. FIG. 3B illustrates the other side of the electronic device in a folded state according to an embodiment.

According to an embodiment with reference to FIGS. 2A to 3B, the electronic device 101 may include a first housing 210 (e.g., a first housing part or a first housing structure) and a second housing 220 (e.g., a second housing part or a second housing structure) that are rotatably coupled to each other about a folding axis (F) via at least one hinge module (e.g., a hinge device or hinge structure). For example, the first housing 210 and the second housing 220 may configure a housing (e.g., a foldable housing) of the electronic device 101. For example, the electronic device 101 may include a first display 230 (e.g., a flexible display, a foldable display, or a main display) that is accommodated in the first housing 210 and the second housing 220 and supported thereby. For example, the electronic device 101 may further include a second display 300 (e.g., a sub display) disposed via the second housing 220. For example, the electronic device 101 may include a hinge housing 310 (e.g., a hinge cover) configured such that, in the unfolded state, the hinge housing 310 is at least partially hidden from view by the first housing 210 and the second housing 220, and, in the folded state or during folding, the hinge housing 310 covers at least one hinge module so as not to be exposed externally. In the description, a surface on which the first display 230 is disposed may be defined as a front surface of the electronic device 101, and a surface opposite to the front surface may be defined as a rear surface of the electronic device 101. A surface surrounding a space between the front surface and the rear surface may be defined as a lateral surface of the electronic device 101. In an example, as shown in FIGS. 2A to 3B, the folding axis (F) is configured based on the y-axis, but the folding axis (F) is not limited thereto and may also be configured based on the x-axis.

According to an embodiment, the first housing 210 and the second housing 220 may be disposed on opposite sides of the folding axis (F), be symmetrical with respect to the folding axis (F) as a whole, and be folded to align with each other. According to another embodiment, the first housing 210 and the second housing 220 may be folded asymmetrically with respect to the folding axis (F). For example, an angle or distance configured between the first housing 210 and the second housing 220 may vary depending on whether the electronic device 101 is in an unfolded state, a folded state, or an intermediate state.

According to an embodiment, the first housing 210 may be connected to at least one hinge module and may include a first surface 211 disposed to face the front surface of the electronic device 101 in an unfolded state, a second surface 212 facing in a direction opposite to the first surface 211, and/or a first lateral member 213 surrounding at least a portion of a first space 2101 between the first surface 211 and the second surface 212. For example, the second housing 220 may be connected to at least one hinge module and may include a third surface 221 disposed to face the front surface of the electronic device 101 in the unfolded state, a fourth surface 222 facing in a direction opposite to the third surface 221, and/or a second lateral member 223 surrounding at least a portion of a second space 2201 between the third surface 221 and the fourth surface 222. In an example, the first surface 211 may face substantially the same direction as the third surface 221 in the unfolded state and may at least partially face the third surface 221 in the folded state. In another example, the electronic device 101 may further include a recess 201 disposed via structural coupling between the first housing 210 and the second housing 220 to accommodate the first display 230. The recess 201 may have substantially the same size as the first display 230. In an example, when the first display 230 is viewed from above, the first housing 210 may include a first protective frame 213a (e.g., a first decorative member) that is combined with the first lateral member 213 and overlaps and covers an edge of the first display 230 such that the edge of the first display 230 is invisible from the outside. The first protective frame 213a may be integrally formed with the first lateral member 213. For example, when the first display 230 is viewed from above, the second housing 220 may include a second protective frame 223a (e.g., a second decorative member) that is combined with the second lateral member 223 and overlaps and covers an edge of the first display 230 such that the edge of the first display 230 is invisible from the outside. The second protective frame 223a may be integrated with the second lateral member 223. In some embodiments, the first protective frame 213a and the second protective frame 223a may be omitted.

According to an embodiment, the hinge housing 310 (e.g., a hinge cover) may be disposed between the first housing 210 and the second housing 220 and may be arranged to cover at least a portion of at least one hinge module. For example, depending on whether the electronic device 101 is in an unfolded state, a folded state, or an intermediate state, the hinge housing 310 may be covered by a portion of the first housing 210 and the second housing 220 or may be visually exposed to the outside. For example, when the electronic device 101 is in the unfolded state, at least a portion of the hinge housing 310 may be covered by the first housing 210 and the second housing 220 so as to be substantially invisible from the outside. When the electronic device 101 is in the folded state, at least a portion of the hinge housing 310 may be disposed between the first housing 210 and the second housing 220 so as to be visible from the outside. When the first housing 210 and the second housing 220 form a certain angle (i.e., are in an intermediate state), the hinge housing 310 may be at least partially visible from the outside between the first housing 210 and the second housing 220. An area of the hinge housing 310 that is visually exposed to the outside may be smaller than that in the completely folded state. In an example, the hinge housing 310 may include a curved surface.

According to an embodiment, the electronic device 101 may include at least one of a display 230 and/or 300, an input device 215, an audio output device 227 and/or 228, a sensor module 217a, 217b and/or 226, a camera module 216a, 216b and/or 225, a key input device 219, an indicator (not shown), or a connector port 229, which may be disposed in the first housing 210 and/or the second housing 220. In some embodiments, the electronic device 101 may further include at least one other component. In other embodiments, at least one of the above-described components may be omitted.

According to an embodiment, the at least one display 230 and/or 300 may include a first display 230 (e.g., a flexible display) that is disposed to be supported from the first surface 211 of the first housing 210 to the third surface 221 of the second housing 220, and a second display 300 that is disposed in the inner space of the second housing 220 so as to be at least partially visible from the outside through the fourth surface 222. In some embodiments, the second display 300 may also be disposed in the inner space of the first housing 210 to be visible from the outside through the second surface 212. For example, the first display 230 may be primarily used when the electronic device 101 is in an unfolded state, while the second display 300 may be primarily used when the electronic device 101 is in a folded state. For example, when the electronic device 101 is in an intermediate state, the availability of the first display 230 and/or the second display 300 may be controlled based on a folding angle between the first housing 210 and the second housing 220.

According to an embodiment, the first display 230 may be disposed in a receiving space configured by the pair of housings 210 and 220. For example, the first display 230 may be disposed in the recess 201 configured by the pair of housings 210 and/or 220 and may be arranged to occupy substantially most of the front surface of the electronic device 101 in an unfolded state. The first display 230 may include a flexible display, at least a partial area thereof may be deformed into a planar or curved shape. The first display 230 may include a first area 230a corresponding to the first housing 210 and a second area 230b corresponding to the second housing 220. For example, the first display 230 may include a folding area 230c including portions of the first area 230a and the second area 230b, based on the folding axis (F). For example, at least a portion of the folding area 230c may include an area corresponding to at least one hinge module. For example, the area division of the first display 230 is merely an exemplary division based on the pair of housings 210 and 220 and at least one hinge module, and the first display 230 may, in practice, provide a seamless, single full screen across the pair of housings 210 and 220 and at least one hinge module. The first area 230a and the second area 230b may have an overall symmetrical shape or a partially asymmetrical shape with respect to the folding area 230c and/or the folding axis (F).

According to an embodiment, the electronic device 101 may include a first rear cover 240 disposed on the second surface 212 of the first housing 210 and a second rear cover 250 disposed on the fourth surface 222 of the second housing 220. In some embodiments, at least a portion of the first rear cover 240 may be integrally formed with the first lateral member 213. In some embodiments, at least a portion of the second rear cover 250 may be integrally formed with the second lateral member 223. For example, at least one of the first rear cover 240 and the second rear cover 250 may be formed of a substantially transparent plate (e.g., a glass plate including one or more coating layers or a polymer plate) or an opaque plate. In an example, the first rear cover 240 may be formed of an opaque plate made of, for example, coated or colored glass, ceramic, polymer, or metal (e.g., aluminum, stainless steel (STS), or magnesium), or a combination of at least two of these materials. For example, the second rear cover 250 may be formed of a substantially transparent plate, such as glass or polymer. Accordingly, the second display 300 may be disposed in the inner space of the second housing 220 so as to be visible from the outside through the second rear cover 250.

According to an embodiment, the input device 215 may include a microphone. In some embodiments, the input device 215 may include multiple microphones arranged to detect a direction of sound. For example, the audio output device 227 and/or 228 may include speakers. For example, the audio output device 227 and/or 228 may include a receiver 227 for voice calls, which is disposed through the fourth surface 222 of the second housing 220, and an external speaker 228, which is disposed through at least a portion of the second lateral member 223 of the second housing 220. In some embodiments, the input device 215, the audio output device 227 and/or 228, and the connector 229 may be disposed in spaces of the first housing 210 and/or the second housing 220 and may be exposed to an external environment through at least one hole disposed in the first housing 210 and/or the second housing 220. In some embodiments, the holes disposed in the first housing 210 and/or the second housing 220 may be commonly used for the input device 215 and the audio output device 227 and/or 228. In some embodiments, the audio output device 227 and/or 228 may include a speaker (e.g., a piezoelectric speaker) operable without a hole disposed in the first housing 210 and/or the second housing 220.

According to an embodiment, the camera module 216a, 216b, and/or 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. For example, the electronic device 101 may include a flash 218 disposed near the second camera module 216b. For example, the flash 218 may include a light-emitting diode (LED) or a xenon lamp. The camera modules 216a, 216b, and/or 225 may include one or more lenses, image sensors, and/or image signal processors. In some embodiments, at least one of the camera modules 216a, 216b, and/or 225 may include two or more lenses (e.g., wide-angle and telephoto lenses) and image sensors, which may be disposed together on one surface of the first housing 210 and/or the second housing 220.

According to an embodiment, the sensor module 217a, 217b, and/or 226 may generate an electrical signal or data value corresponding to an internal operating state or an external environmental condition of the electronic device 101. For example, the sensor module 217a, 217b, and/or 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In some embodiments, the sensor module 217a, 217b, and/or 226 may include at least one of a gesture sensor, a grip sensor, a color sensor, an infrared (IR) sensor, an illumination sensor, an ultrasonic sensor, an iris recognition sensor, or a distance detection sensor (e.g., a time of flight (TOF) sensor or a light detection and ranging (LiDAR) sensor).

According to an embodiment, the electronic device 101 may further include at least one sensor module (not shown), such as a pressure sensor, a magnetic sensor, a biometric sensor, a temperature sensor, a humidity sensor, or a fingerprint recognition sensor. In some embodiments, the fingerprint recognition sensor may be disposed through at least one of the first lateral member 213 of the first housing 210 and/or the second lateral member 223 of the second housing 220.

According to an embodiment, the key input device 219 may be disposed to be visually exposed to the outside through the first lateral member 213 of the first housing 210. In some embodiments, the key input device 219 may also be disposed to be visually exposed to the outside through the second lateral member 223 of the second housing 220. In some embodiments, the electronic device 101 may not include some or all of the key input devices 219, and any omitted key input device 219 may be implemented in another form, such as a soft key, on at least one of the displays 230 and/or 300. In an embodiment, the key input device 219 may be implemented using a pressure sensor included in at least one of the displays 230 and/or 300.

According to an embodiment, the connector port 229 may include a connector (e.g., a USB connector or an interface connector port (IF) module) configured to transmit and receive power and/or data with an external electronic device. In some embodiments, the connector port 229 may also perform a function of transmitting and receiving audio signals with the external electronic device or may further include a separate connector port (e.g., an ear jack hole) for performing a function for transmitting and receiving audio signals.

According to an embodiment, at least one camera module 216a and/or 225 of the camera modules 216a, 216b, and/or 225, at least one sensor module 217a and/or 226 of the sensor modules 217a, 217b, and/or 226, and/or an indicator may be disposed to be visually exposed through at least one of the displays 230 and/or 300. For example, at least one camera module 216a and/or 225, at least one sensor module 217a and/or 226, and/or the indicator may be disposed within the inner space of at least one housings 210 and/or 220, below an active area (display area) of at least one displays 230 and/or 300, and may be arranged to be in contact with an external environment through a transparent area or an opening that penetrates a cover member (e.g., a window layer) and/or the second rear cover 250. In an example, the area in which at least one display 230 and/or 300 and at least one camera module 216a and/or 225 face each other may be configured as a transmissive area, which is part of an area for displaying content and has a predetermined transmittance. The transmissive area may have a transmittance in the range of about 5% to about 20%. The transmissive area may include an area overlapping with an effective area (e.g., a field-of-view area) of at least one camera module 216a and/or 225 through which light passes and is imaged by the image sensor to generate an image. For example, the transmissive area of at least one display 230 and/or 300 may include an area having a lower pixel density than the surrounding area. For example, the transmissive area may substitute for an opening. For example, the at least one camera module 216a and/or 225 may include an under-display camera (UDC) or an under-panel camera (UPC). In an embodiment, some camera modules 216a and/or 225 or sensor modules 217a and/or 226 may be arranged to perform the functions thereof without being visually exposed through the display. For example, the area facing the camera module 216a and/or 225 and/or the sensor module 217a and/or 226, disposed below the display 230 and/or 300 (e.g., a display panel) may adopt a UDC (under display camera), in which a perforated opening may be unnecessary.

According to an embodiment, when the electronic device 101 is in an unfolded state (e.g., the states illustrated in FIGS. 2A and 2B), the first housing 210 and the second housing 220 may form an angle of approximately 180 degrees, and the first area 230a, the second area 230b, and the folding area 230c of the first display 230 may be arranged to be substantially on the same plane and facing the same direction (e.g., the z-axis direction). In an embodiment, when the electronic device 101 is in the unfolded state, the first housing 210 may be rotated with respect to the second housing 220 at an angle of approximately 360 degrees so that the second surface 212 and the fourth surface 222 face each other (out-folding type).

According to an embodiment, when the electronic device 101 is in a folded state (e.g., the states illustrated in FIGS. 3A and 3B), the first surface 211 of the first housing 210 and the third surface 221 of the second housing 220 may be arranged to face each other. In this case, the first area 230a and the second area 230b of the first display 230 may form a small angle (e.g., in a range of about 0 degrees to about 10 degrees) with each other through the folding area 230c and may be arranged to face each other. For example, at least a portion of the folding area 230c may be deformed into a curved shape having a predetermined curvature. When the electronic device 101 is in an intermediate state, the first housing 210 and the second housing 220 may be arranged at a certain angle relative to each other. In this case, the first area 230a and the second area 230b of the first display 230 may form an angle greater than that in the folded state but smaller than that in the unfolded state, and the curvature of the folding area 230c may be smaller than in the folded state and greater than in the unfolded state. In some embodiments, the first housing 210 and the second housing 220 may, via at least one hinge module, form a designated folding angle between the folded and unfolded states and may be stopped at the designated folding angle (free-stop function). In other embodiments, the first housing 210 and the second housing 220 may, through at least one hinge module, continuously move in a folding or unfolding direction under applied pressure, based on a designated inflection angle.

According to an embodiment, the electronic device 101 may include conductive portions 320, 330, 340, and/or 350 that serve as antenna structures. For example, the electronic device 101 may include a first conductive portion 340 disposed on at least a part of the first lateral member 213 and used as a first antenna structure. In an example, the first conductive portion 340 may be segmented from the conductive first lateral member 213 by a first segmented portion 322 (e.g., a first non-conductive portion) and a second segmented portion 341 (e.g., a second non-conductive portion) spaced apart from each other. The first conductive portion 340 may be configured, via a wireless communication circuit (e.g., the wireless communication module 192 of FIG. 1), as a first antenna (A1) to transmit or receive a wireless signal in a designated first frequency band.

For example, the electronic device 101 may include a second conductive portion 330 disposed on at least a part of the first lateral member 213 and used as a second antenna structure. In an example, the second conductive portion 330 may be segmented from the conductive first lateral member 213 by a third segmented portion 321 (e.g., a third non-conductive portion). The third conductive portion 330 may be configured, through the wireless communication circuit (e.g., the wireless communication module 192 of FIG. 1), as a second antenna (A2) to transmit or receive a wireless signal in a designated second frequency band. In an example, the designated second frequency band may be a legacy band (e.g., about 2.4 GHz band).

For example, the electronic device 101 may include a third conductive portion 320 disposed on at least a part of the first lateral member 213 and used as a third antenna structure. In an example, the third conductive portion 320 may be segmented from the conductive first lateral member 213 by a first segmented portion 322 (e.g., a first non-conductive portion) and a third segmented portion 321 (e.g., a third non-conductive portion) spaced apart from each other. The third conductive portion 320 may be configured, via a wireless communication circuit (e.g., the wireless communication module 192 of FIG. 1), as a third antenna (A3) to transmit or receive a wireless signal in a designated third frequency band. In an example, the designated third frequency band may be a legacy band and/or a frequency band for wireless LAN communication (e.g., about 2.4 GHz band, about 5 GHz band, and/or about 6 GHz band).

For example, the electronic device 101 may include a fourth conductive portion 350 disposed on at least a part of the first lateral member 213 and used as a fourth antenna structure. In an example, the fourth conductive portion 350 may be segmented from the conductive first lateral member 213 by a second segmented portion 341 (e.g., a second non-conductive portion) and a fourth segmented portion 351 (e.g., a fourth non-conductive portion) spaced apart from each other. The fourth conductive portion 350 may be configured, via a wireless communication circuit (e.g., the wireless communication module 192 of FIG. 1), as a fourth antenna (A4) to transmit or receive a wireless signal in a designated fourth frequency band.

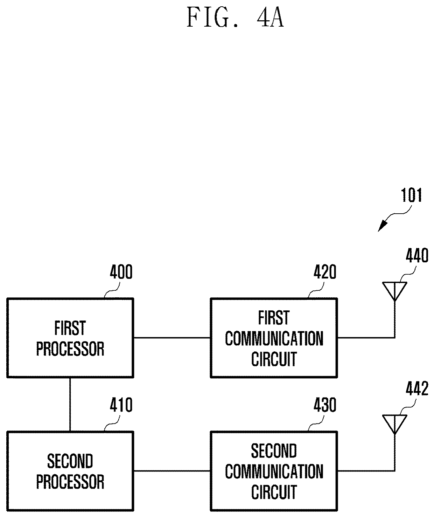

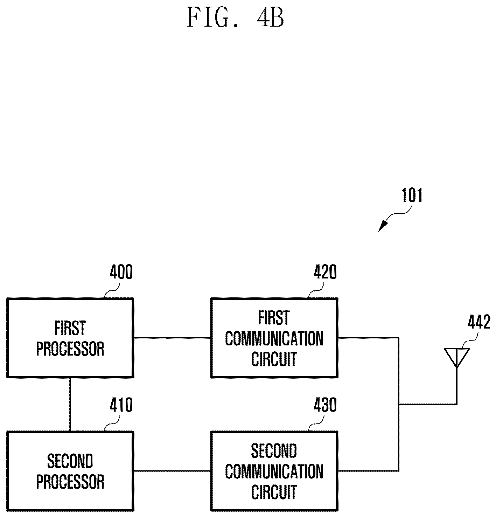

FIG. 4A is a block diagram of an electronic device including multiple antennas that are physically adjacent to each other according to an embodiment. FIG. 4B is a block diagram of an electronic device in which multiple communication schemes share an antenna according to an embodiment. For example, the electronic device 101 illustrated in FIGS. 4A and/or 4B may be at least partially similar to the electronic device 101 illustrated in FIGS. 1, 2A, 2B, 3A, or 3B, or may further include various embodiments thereof.

According to an embodiment referring to FIGS. 4A and 4B, the electronic device 101 may include at least one of a first processor 400, a second processor 410, a first communication circuit 420, and a second communication circuit 430. According to an embodiment, the first processor 400 may be substantially the same as the processor 120 or the sub-processor 123 (e.g., a communication processor) illustrated in FIG. 1 or included in the processor 120 or the sub-processor 123. The second processor 410 may be substantially the same as the processor 120 or the main processor 121 (e.g., an application processor) illustrated in FIG. 1 or included in the processor 120 or the main processor 121. At least one of the first communication circuit 420 and the second communication circuit 430 may be substantially the same as the wireless communication module 192 illustrated in FIG. 1 or included in the wireless communication module 192.

According to an embodiment, the first processor 400 may control at least one of the first communication circuit 420 and the second communication circuit 430, which are operatively, functionally, and/or electrically connected thereto. For example, the first processor 400 may include at least one processor having a processing circuit. According to an embodiment, the second processor 410 may control at least one of the first processor 400 and the second communication circuit 430, which are operatively, functionally, and/or electrically connected thereto. For example, the second processor 410 may include at least one processor having a processing circuit.

According to an embodiment, the first communication circuit 420 may perform at least one of transmission or reception of at least one of a signal or data with an external electronic device (e.g., the electronic device 102 or 104 of FIG. 1), based on a first communication scheme. For example, the first communication scheme may be a cellular communication scheme supporting a designated frequency band and may include at least one of second generation (G), 3G, 4G (e.g., long-term evolution (LTE)), or 5G (e.g., NR (new radio)).

According to an embodiment, the second communication circuit 430 may perform at least one of transmission or reception of at least one of a signal or data with an external electronic device (e.g., the electronic device 102 or 104 of FIG. 1), based on a second communication scheme. For example, the second communication scheme may include a wireless LAN communication scheme (e.g., Wi-Fi) supporting at least a part of a designated frequency band.

According to an embodiment, the first communication circuit 420 and the second communication circuit 430 may perform wireless communication through different antennas, as illustrated in FIG. 4A. For example, the first communication circuit 420 may perform at least one of transmission or reception of at least one a signal or data with an external electronic device (e.g., the electronic device 102 or 104 of FIG. 1), based on the first communication scheme via a second antenna 440 (e.g., the second antenna (A2) of FIGS. 2A to 3B) among multiple antennas (e.g., the first antenna (A1), the second antenna (A2), the third antenna (A3), and/or the fourth antenna (A4) of FIGS. 2A to 3B) provided in the electronic device 101. For example, the second communication circuit 430 may perform at least one of transmission or reception of at least one of a signal or data with an external electronic device (e.g., the electronic device 102 or 104 of FIG. 1), based on the second communication scheme via a third antenna 442 (e.g., the third antenna (A3) of FIGS. 2A to 3B). For example, the second antenna 440 and the third antenna 442 may be disposed physically adjacent to each other. In an example, the physically adjacent state may include a state in which a distance between the second antenna 440 and the third antenna 442 is within a designated reference distance. In an example, the designated reference distance may include a minimum distance determined such that the antennas do not interfere with each other.

According to an embodiment, the first communication circuit 420 and the second communication circuit 430 may perform wireless communication by sharing one antenna, as illustrated in FIG. 4B. For example, the first communication circuit 420 and the second communication circuit 430 may perform at least one of transmission or reception of at least one of a signal or data with an external electronic device (e.g., the electronic device 102 or 104 of FIG. 1), based on the first communication scheme or the second communication scheme via the third antenna 442 (e.g., the third antenna (A3) of FIGS. 2A to 3B) among the multiple antennas (e.g., the first antenna (A1), the second antenna (A2), the third antenna (A3), and/or the fourth antenna (A4) of FIGS. 2A to 3B) provided in the electronic device 101.

According to an embodiment, the second processor 410 may control the second communication circuit 430 to perform wireless communication based on the second communication scheme. For example, the second processor 410 may control the second communication circuit 430 to transmit a signal or data to the outside, based on the second communication scheme.

According to an embodiment, the second processor 410 may transmit information related to an operation state of the second communication scheme to the first processor 400. For example, when the second communication scheme is activated, the second processor 410 may transmit information related to an operation state of the second communication scheme to the first processor 400. In an example, the information related to an operation state of the second communication scheme may include information related to activation of the second communication scheme. In an example, the information related to the operation state of the second communication scheme may include information related to a standby state (idle state), a configured state, or an active state of the second communication scheme. In an example, the standby state of the second communication scheme may include a state in which the second communication circuit 430 is activated but not connected to an access point (AP). In an example, the configured state of the second communication scheme may include a state in which the second communication circuit 430 is activated and connected to the AP, but data transmission and reception are not being performed. In an example, the active state of the second communication scheme may include a state in which the second communication circuit 430 is activated and connected to the AP, and is performing at least one of data transmission or reception with the AP. In an example, activation of the second communication scheme may occur based on execution of a function or application program related to the second communication scheme. In an example, activation of the second communication scheme may include a series of operations in which the second communication circuit 430 in an inactive state becomes activated.

For example, when the second communication scheme is deactivated, the second processor 410 may transmit information related to an operation state of the second communication scheme to the first processor 400. In an example, the information related to the operation state of the second communication scheme may include information related to deactivation of the second communication scheme. In an example, the deactivation of the second communication scheme may occur based on the termination of a function or application program related to the second communication scheme. In an example, the deactivation of the second communication scheme may include a series of operations in which the second communication circuit 430 in an active state becomes deactivated.

For example, when a change in the operation state of the second communication scheme is detected, the second processor 410 may transmit information related to the operation state of the second communication scheme to the first processor 400. For example, the second processor 410 may periodically transmit information related to the operation state of the second communication scheme to the first processor 400, based on a designated period.

According to an embodiment, the first processor 400 may control the first communication circuit 420 to perform wireless communication based on the first communication scheme. For example, the first processor 400 may control the first communication circuit 420 to transmit a signal or data to the outside, based on the first communication scheme.

According to an embodiment, the first processor 400 may match the impedance of at least one antenna related to wireless communication, based on operation states of the first communication scheme and the second communication scheme. In an example, the at least one antenna related to wireless communication may include at least one of the second antenna 440 of FIG. 4A (e.g., the second antenna (A2) of FIGS. 2A to 3B) or the third antenna 442 of FIG. 4A (e.g., the third antenna (A3) of FIGS. 2A to 3B), or the third antenna 442 of FIG. 4B (e.g., the third antenna (A3) of FIGS. 2A to 3B). In an example, the impedance matching may include a series of operations of controlling the length of the antenna (e.g., a feeding length or an aperture length) via at least one of a tuner or a switch associated with the antenna, based on a tuning code corresponding to the impedance of the antenna. In an example, the operation state of the first communication scheme may include information related to a standby state (sleep state), a searching state, or a connected state of the first communication scheme. In an example, the standby state of the first communication scheme may include a radio resource control (RRC) standby state (idle state) or an RRC inactive state of the first communication circuit 420. In an example, the searching state of the first communication scheme may include a state in which network searching related to the first communication scheme is performed. In an example, the connected state of the first communication scheme may include an RRC connected state in which at least one of data transmission or reception is being performed via the first communication circuit 420.

For example, when information related to part of the operation state (e.g., a standby state or an active state) of the second communication scheme is obtainable from the second processor 410, or when the operation state of the second communication scheme cannot be identified, the first processor 400 may select a tuning code, based on Table 1 or Table 2.

**[Table 1]**

| First communication scheme | Second communication scheme | Tuning code |
|---|---|---|
| Standby state, searching state | Standby state | Standby state (Wi-Fi), searching state |
| Standby state, searching state | Active state | Standby state (Wi-Fi), searching state |
| Connected state | Standby state | Connected state |
| Connected state | Active state | Connected state |

For example, the tuning code in Table 1 may include at least one of a first code corresponding to the standby state of the first communication scheme, a second code corresponding to the searching state of the first communication scheme, or a third code corresponding to the connected state of the first communication scheme. In an example, the first code corresponding to the standby state of the first communication scheme may be defined as a fourth code corresponding to the second communication scheme. In an example, the fourth code may be defined to correspond to the active state of the second communication scheme.

For example, when the first communication scheme is in a connected state, the first processor 400 may select the third code corresponding to the connected state of the first communication scheme, regardless of the operation state of the second communication scheme.

For example, when both the first communication scheme and the second communication scheme are in a standby state, the first processor 400 may select the first code (e.g., defined as the fourth code) corresponding to the standby state of the first communication scheme. When the first communication scheme is in a searching state and the second communication scheme is in a standby state, the first processor 400 may select the second code corresponding to the searching state of the first communication scheme.

For example, when the first communication scheme is in a standby state and the second communication scheme is in an active state, the first processor 400 may select the first code (e.g., defined as a fourth code) corresponding to the standby state of the first communication scheme. When the first communication scheme is in a searching state and the second communication scheme is in an active state, the first processor 400 may select the second code corresponding to the searching state of the first communication scheme.

**[Table 2]**

| First communication scheme | Second communication scheme | Tuning code |
|---|---|---|
| Standby state, searching state | Standby state | Standby state, searching state |
| Standby state, searching state | Active state | Wireless LAN, searching state |
| Connected state | Standby state | Connected state |
| Connected state | Active state | Connected state |

For example, the tuning codes of Table 2 may include at least one of a first code corresponding to the standby state of the first communication scheme, a second code corresponding to the searching state of the first communication scheme, a third code corresponding to the connected state of the first communication scheme, or a fourth code corresponding to wireless LAN.

For example, when the first communication scheme is in a connected state, the first processor 400 may select the third code corresponding to the connected state of the first communication scheme, regardless of the operation state of the second communication scheme.

For example, when both the first communication scheme and the second communication scheme are in a standby state, the first processor 400 may select the first code corresponding to the standby state of the first communication scheme. When the first communication scheme is in a searching state and the second communication scheme is in a standby state, the first processor 400 may select the second code corresponding to the searching state of the first communication scheme.

For example, when the first communication scheme is in a standby state and the second communication scheme is in an active state, the first processor 400 may select the fourth code corresponding to wireless LAN. When the first communication scheme is in a searching state and the second communication scheme is in an active state, the first processor 400 may select the second code corresponding to the searching state of the first communication scheme.

For example, when information related to the operation state of the second communication scheme is obtainable from the second processor 410, the first processor 400 may select a tuning code based on Table 3.

**[Table 3]**

| First communication scheme | Second communication scheme | Tuning code |
|---|---|---|
| Activated state | Inactive state | Standby state, searching state, connected state |
| Inactive state | Activated state | Wireless LAN |
| Standby state, searching state | Standby state | Standby state, searching state |
| Standby state, searching state | Configured state | Wireless LAN |
| Standby state, searching state | Active state | Wireless LAN |
| Connected state | Active state | Connected state |

For example, the tuning codes of Table 3 may include at least one of a first code corresponding to the standby state of the first communication scheme, a second code corresponding to the searching state of the first communication scheme, a third code corresponding to the connected state of the first communication scheme, or a fourth code corresponding to wireless LAN.

For example, when the first communication scheme (or the first communication circuit 420) is in an active state and the second communication scheme (or the second communication circuit 430) is in an inactive state, the first processor 400 may select the first code, the second code, or the third code, based on the operation state of the first communication scheme. For example, the first code may be selected when the operation state of the first communication scheme is in a standby state. For example, the second code may be selected when the operation state of the first communication scheme is in a searching state. For example, the third code may be selected when the operation state of the first communication scheme is in a connected state.

For example, when the first communication scheme (or the first communication circuit 420) is in an inactive state and the second communication scheme (or the second communication circuit 430) is in an active state, the first processor 400 may select the fourth code corresponding to wireless LAN.

For example, when the first communication scheme is in a connected state, the first processor 400 may select the third code corresponding to the connected state of the first communication scheme, regardless of the operation state of the second communication scheme. For example, when the first communication scheme is in a connected state and the second communication scheme is in an active state, the first processor 400 may select the third code corresponding to the connected state of the first communication scheme, which has a relatively higher priority in communication connection. For example, the connected state of the first communication scheme may include a state in which a mobile hotspot, voice of long-term evolution (VoLTE), or voice of new radio (VoNR) is being performed.

For example, when both the first communication scheme and the second communication scheme are in a standby state, the first processor 400 may select the first code corresponding to the standby state of the first communication scheme. When the first communication scheme is in a searching state and the second communication scheme is in a standby state, the first processor 400 may select the second code corresponding to the searching state of the first communication scheme.

For example, when the first communication scheme is in a standby state and the second communication scheme is in a configured state, the first processor 400 may determine that there is a high possibility of performing data communication through the wireless LAN and select the fourth code corresponding to the wireless LAN. For example, when the first communication scheme is in a searching state and the second communication scheme is in a configured state, the first processor 400 may select the second code corresponding to the searching state of the first communication scheme. For example, when the first communication scheme is in a searching state and the second communication scheme is in a configured state, the first processor 400 may select the fourth code corresponding to wireless LAN.

For example, when the first communication scheme is in a standby state and the second communication scheme is in an active state, the first processor 400 may select the fourth code corresponding to wireless LAN. For example, when the first communication scheme is in a searching state and the second communication scheme is in an active state, the first processor 400 may select the second code corresponding to the searching state of the first communication scheme. For example, when the first communication scheme is in a searching state and the second communication scheme is in an active state, the first processor 400 may select the fourth code corresponding to wireless LAN.

For example, the first processor 400 may control at least one of a tuner or a switch of at least one antenna related to wireless communication so as to match an impedance of the at least one antenna, based on a tuning code selected according to operation states of the first communication scheme and the second communication scheme.

According to an embodiment, the electronic device 101 may include a memory configured to store various data used by at least one component of the electronic device 101 (e.g., the first processor 400, the second processor 410, the first communication circuit 420, or the second communication circuit 430). For example, the memory may be operatively connected to at least one of the first processor 400, the second processor 410, the first communication circuit 420, or the second communication circuit 430. For example, the memory may store various instructions executable by the first processor 400 or the second processor 410.

According to an embodiment, the electronic device (e.g., the electronic device 101 of FIGS. 1, 2A, 2B, 3A, 3B, 4A, or 4B) may include a first antenna (e.g., the second antenna (A2) of FIGS. 2A, 2B, 3A, or 3B), a second antenna (e.g., the third antenna (A3) of FIGS. 2A, 2B, 3A, or 3B), a communication processor (e.g., the sub-processor 123 of FIG. 1 or the first processor 400 of FIGS. 4A or 4B) configured to support cellular communication in a designated frequency band via the first antenna, an application processor (e.g., the main processor 121 of FIG. 1 or the second processor 410 of FIGS. 4A or 4B) configured to support wireless LAN communication in at least part of a designated frequency band via the second antenna, and a memory operatively connected to the communication processor and the application processor. According to an embodiment, the memory may store instructions that, when executed by at least one of the communication processor or the application processor, cause the electronic device to identify an operation state of cellular communication and an operation state of wireless LAN communication when both cellular communication and wireless LAN communication are activated. According to an embodiment, the memory may store instructions that, when executed by at least one of the communication processor or the application processor, cause the electronic device to match an impedance of at least one of the first antenna or the second antenna, based on the operation state of cellular communication and the operation state of wireless LAN communication.

According to an embodiment, the first antenna and the second antenna may be disposed within a physically designated distance.

According to an embodiment, the electronic device may include a first housing (e.g., the first housing 210 of FIGS. 2A, 2B, 3A, or 3B), a second housing (e.g., the second housing 220 of FIGS. 2A, 2B, 3A, or 3B) foldably coupled to the first housing through a hinge device, and a flexible display (e.g., the flexible display 230 of FIGS. 2A, 2B, 3A, or 3B) disposed to be supported by at least a portion of the first housing 210 and at least a portion of the second housing 220. According to an embodiment, the first antenna and the second antenna may be disposed in the first housing.

According to an embodiment, information related to an operation state of wireless LAN communication may be obtained by the communication processor from the application processor.

According to an embodiment, the memory may store instructions that, when executed by at least one of the communication processor or the application processor, cause the electronic device to select a tuning code, based on an operation state of cellular communication and an operation state of wireless LAN communication. According to an embodiment, the memory may store instructions that, when executed by at least one of the communication processor or the application processor, cause the electronic device to match an impedance of at least one of the first antenna or the second antenna, based on the tuning code.

According to an embodiment, the memory may store instructions that, when executed by at least one of the communication processor or the application processor, cause the electronic device to select a tuning code corresponding to the cellular communication when both cellular communication and wireless LAN communication are in a standby state.

According to an embodiment, the memory may store instructions that, when executed by at least one of the communication processor or the application processor, cause the electronic device to, in case that the cellular communication is in a standby state and the electronic device is connected to an access point (AP) through the wireless LAN communication but has not performed data communication yet, select a tuning code corresponding to the wireless LAN communication.

According to an embodiment, the memory may store instructions that, when executed by at least one of the communication processor or the application processor, cause the electronic device to select a tuning code corresponding to the wireless LAN communication in case that cellular communication is in a searching state and the electronic device performs data communication based on the wireless LAN communication.

According to an embodiment, the memory may store instructions that, when executed by at least one of the communication processor or the application processor, cause the electronic device to select a tuning code corresponding to the wireless LAN communication in case that the cellular communication is in a standby state and the electronic device performs data communication based on the wireless LAN communication.

According to an embodiment, the memory may store instructions that, when executed by at least one of the communication processor or the application processor, cause the electronic device to select a tuning code corresponding to cellular communication in case that the electronic device performs data communication based on the cellular communication.

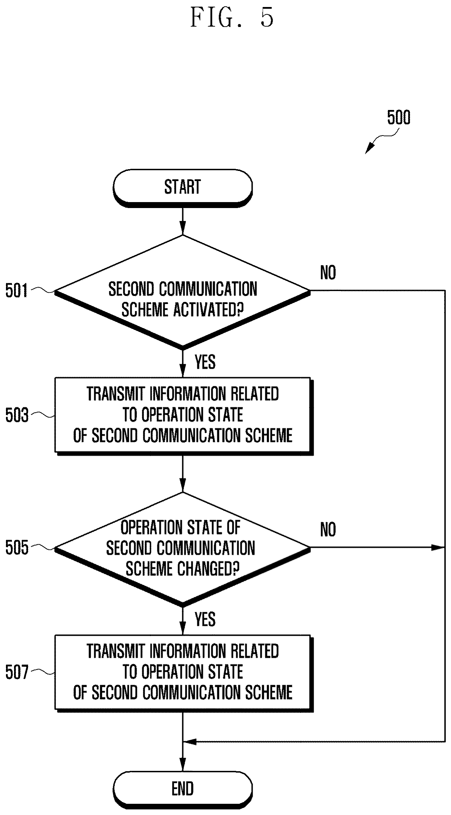

FIG. 5 is a flowchart 500 for sharing operation state information of a second wireless communication in an electronic device according to an embodiment. In the following embodiments, each operation may be performed sequentially, but it is not necessarily limited thereto. For example, the order of the operations may be changed, and at least two operations may be performed in parallel. For example, the electronic device of FIG. 5 may correspond to the electronic device 101 of FIGS. 1, 2A, 2B, 3A, 3B, 4A, or 4B.

According to an embodiment referring to FIG. 5, the electronic device (e.g., the main processor 121 of FIG. 1 or the second processor 410 of FIG. 4A or FIG. 4B) may, in operation 501, identify whether the second communication scheme is activated. For example, the second processor 410 may determine that the second communication scheme (or the second communication circuit 430) is activated, based on the execution of a function or application program associated with the second communication scheme.

According to an embodiment, when the second communication scheme is not activated (e.g., "No" in operation 501), the electronic device (e.g., the main processor 121 or the second processor 410) may terminate the embodiment for sharing operation state information of the second wireless communication.

According to an embodiment, when the second communication scheme is activated (e.g., "Yes" in operation 501), the electronic device (e.g., the main processor 121 or the second processor 410) may, in operation 503, share information related to an operation state of the second communication scheme. For example, the second processor 410 may transmit information related to the operation state of the second communication scheme to the first processor 400, based on the activation of the second communication scheme. For example, the information related to the operation state of the second communication scheme may include information related to the activation of the second communication scheme. For example, the information related to the operation state of the second communication scheme may include information related to a standby state (idle state), a configured state, or an active state of the second communication scheme.

According to an embodiment, the electronic device (e.g., the main processor 121 or the second processor 410) may, in operation 505, identify whether the operation state associated with the second communication scheme has changed.

According to an embodiment, when the operation state of the second communication scheme has not changed (e.g., "No" in operation 505), the electronic device (e.g., the main processor 121 or the second processor 410) may terminate the embodiment for sharing the operation state information of the second wireless communication.

According to an embodiment, when the operation state of the second communication scheme has changed (e.g., "Yes" in operation 505), the electronic device (e.g., the main processor 121 or the second processor 410) may, in operation 507, share information related to the changed operation state of the second communication scheme. For example, the second processor 410 may transmit information related to the changed operation state of the second communication scheme to the first processor 400, based on the change in the operation state of the second communication scheme. For example, the change in the operation state of the second communication scheme may include a change from the standby state to the configured state or active state of the second communication scheme, a change from the configured state to the standby state or active state of the second communication scheme, a change from the active state to the standby state or configured state of the second communication scheme, or a deactivation of the second communication scheme.

According to an embodiment, the second processor 410 may periodically transmit information related to the operation state of the second communication scheme to the first processor 400 while the second communication scheme is activated.

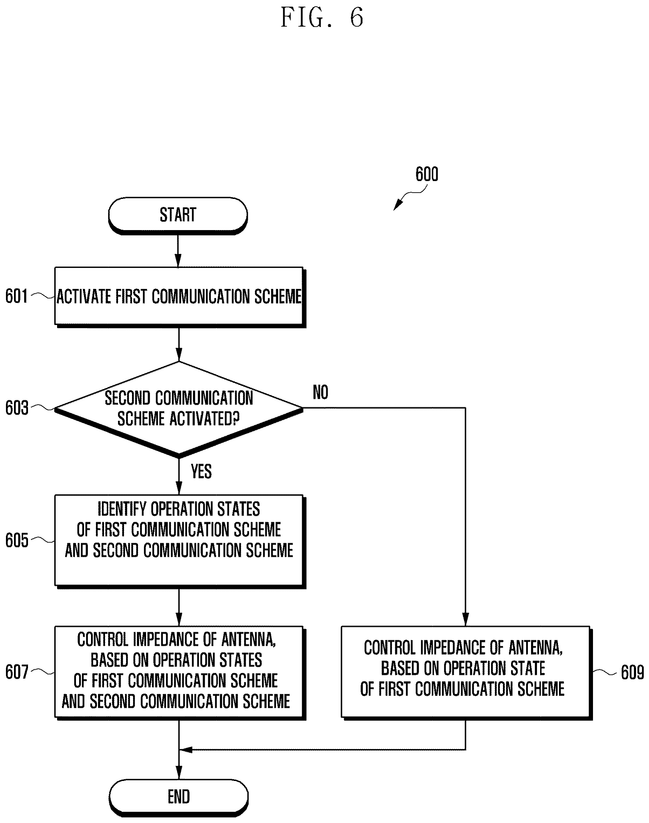

FIG. 6 is a flowchart 600 for matching the impedance of an antenna in an electronic device according to an embodiment. In the following embodiments, each operation may be performed sequentially, but it is not necessarily limited thereto. For example, the order of the operations may be changed, and at least two operations may be performed in parallel. For example, the electronic device of FIG. 6 may correspond to the electronic device 101 of FIGS. 1, 2A, 2B, 3A, 3B, 4A, or 4B.

According to an embodiment referring to FIG. 6, the electronic device (e.g., the sub-processor 123 of FIG. 1 or the first processor 400 of FIG. 4A or FIG. 4B) may, in operation 601, activate wireless communication of the first communication scheme. For example, the first processor 400 may activate wireless communication of the first communication scheme (or the first communication circuit 420), based on the execution of a function or application program associated with the first communication scheme.

According to an embodiment, the electronic device (e.g., the sub-processor 123 or the first processor 400) may, in operation 603, identify whether the second communication scheme is activated. For example, when the first processor 400 receives information related to the operation state of the second communication scheme from the second processor 410, the first processor 400 may determine that the second communication scheme is activated. When the first processor 400 does not receive information related to the operation state of the second communication scheme from the second processor 410, the first processor 400 may determine that the second communication scheme is deactivated.

According to an embodiment, when the second communication scheme is determined to be activated (e.g., "Yes" in operation 603), the electronic device (e.g., the sub-processor 123 or the first processor 400) may, in operation 605, identify the operation states of the first communication scheme and the second communication scheme. For example, the operation state of the first communication scheme may include information related to a standby state (sleep state), a searching state, or a connected state of the first communication scheme. For example, the operation state of the second communication scheme may include a standby state (idle state), a configured state, or an active state of the second communication scheme.

According to an embodiment, the electronic device (e.g., the sub-processor 123 or the first processor 400) may, in operation 607, match the impedance of at least one antenna associated with at least one of the first communication scheme or the second communication scheme, based on the operation states of the first communication scheme or the second communication scheme. For example, the at least one antenna may include at least one of the second antenna 440 of FIG. 4A (e.g., the second antenna (A2) of FIGS. 2A to 3B), the third antenna 442 of FIG. 4A (e.g., the third antenna (A3) of FIGS. 2A to 3B), or the third antenna 442 of FIG. 4B (e.g., the third antenna (A3) of FIGS. 2A to 3B).

For example, when the first communication scheme is in a connected state, the first processor 400 may select a tuning code corresponding to the connected state of the first communication scheme (e.g., the third code in Table 1, Table 2, or Table 3).

When both the first communication scheme and the second communication scheme are in a standby state, the first processor 400 may select a tuning code corresponding to the standby state of the first communication scheme (e.g., the first code in Table 1, Table 2, or Table 3). When the first communication scheme is in a searching state and the second communication scheme is in a standby state, the first processor 400 may select a tuning code corresponding to the searching state of the first communication scheme (e.g., the second code in Table 1, Table 2, or Table 3).

For example, when the first communication scheme is in a standby state and the second communication scheme is in a configured state, the first processor 400 may select a tuning code corresponding to the wireless LAN (e.g., the first code in Table 1 or the fourth code in Table 2 or Table 3). For example, when the first communication scheme is in a searching state and the second communication scheme is in a configured state, the first processor 400 may select a tuning code corresponding to the searching state of the first communication scheme or the wireless LAN.

According to an embodiment, when the first communication scheme is in a standby state and the second communication scheme is in an active state, the first processor 400 may select a tuning code corresponding to the wireless LAN (e.g., the first code in Table 1 or the fourth code in Table 2 or Table 3). When the first communication scheme is in a searching state and the second communication scheme is in an active state, the first processor 400 may select a tuning code corresponding to the searching state of the first communication scheme or the wireless LAN.

For example, the first processor 400 may control at least one of a tuner or a switch of each of at least one antenna associated with wireless communication so as to match an impedance of the at least one antenna, based on a tuning code selected according to the operation states of the first communication scheme and the second communication scheme.

According to an embodiment, when the second communication scheme is determined not to be activated (e.g., "No" in operation 603), the electronic device (e.g., the sub-processor 123 or the first processor 400) may, in operation 609, match the impedance of at least one antenna associated with at least one of the first communication scheme or the second communication scheme, based on the operation state of the first communication scheme. For example, when the first communication scheme is in a connected state, the first processor 400 may select a tuning code corresponding to the connected state of the first communication scheme (e.g., the third code in Table 1, Table 2, or Table 3).

For example, when the first communication scheme is in a standby state, the first processor 400 may select a tuning code corresponding to the standby state of the first communication scheme (e.g., the first code in Table 1, Table 2, or Table 3).

For example, when the first communication scheme is in a searching state, the first processor 400 may select a tuning code corresponding to the searching state of the first communication scheme (e.g., a second code in Table 1, Table 2, or Table 3).

For example, the first processor 400 may control at least one of a tuner or a switch of at least one antenna associated with wireless communication so as to match an impedance of the at least one antenna, based on a tuning code selected according to the operation state of the first communication scheme.

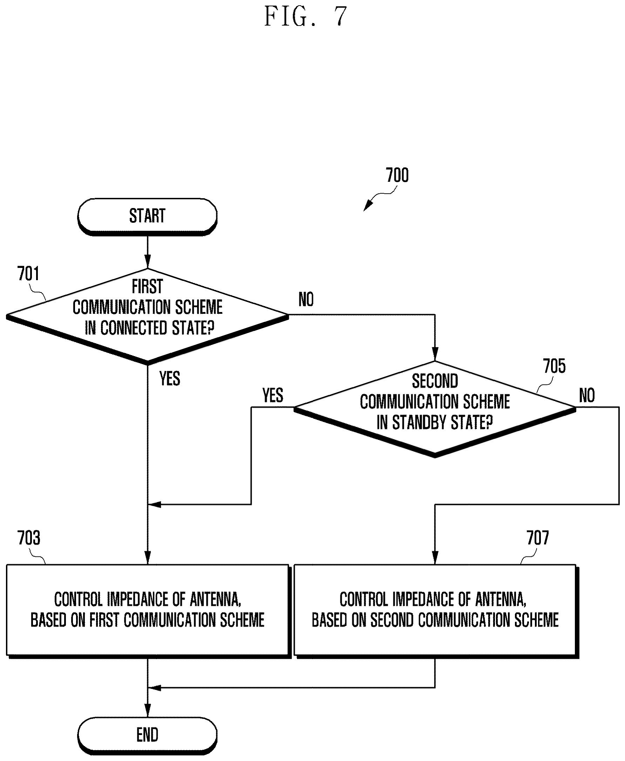

FIG. 7 is a flowchart 700 illustrating antenna impedance matching based on an operation state of wireless communication in an electronic device according to an embodiment. For example, at least a portion of FIG. 7 may include detailed operations of operation 607 in FIG. 6. In the embodiments described below, each operation may be performed sequentially, but it is not necessarily limited thereto. For example, the order of the operations may be changed, and at least two operations may be performed in parallel. For example, the electronic device illustrated in FIG. 7 may correspond to the electronic device 101 of FIG. 1, FIG. 2A, FIG. 2B, FIG. 3A, FIG. 3B, FIG. 4A, or FIG. 4B.

According to an embodiment referring to FIG. 7, in operation 701, the electronic device (e.g., the sub-processor 123 of FIG. 1 or the first processor 400 of FIG. 4A or FIG. 4B) may identify whether the operation state of the first communication scheme is a connected state when the operation states of the first communication scheme and the second communication scheme (e.g., operation 605 of FIG. 6) are identified.

According to an embodiment, when the operation state of the first communication scheme is determined to be a connected state (e.g., "Yes" in operation 701), the electronic device (e.g., the sub-processor 123 or the first processor 400) may, in operation 703, match the impedance of at least one antenna associated with at least one of the first communication scheme or the second communication scheme, based on the operation state of the first communication scheme. For example, the first processor 400 may control at least one of a tuner or a switch of each of at least one antenna associated with at least one of the first communication scheme and the second communication scheme to match the impedance of the at least one antenna, based on a tuning code corresponding to the connected state of the first communication scheme (e.g., the third code in Table 1, Table 2, or Table 3). For example, the at least one antenna may include at least one of the second antenna or the third antenna shown in FIG. 4A, or the third antenna shown in FIG. 4B.

According to an embodiment, when the operation state of the first communication scheme is determined not to be a connected state (e.g., "No" in operation 701), the electronic device (e.g., the sub-processor 123 or the first processor 400) may, in operation 705, identify whether the operation state of the second communication scheme is a standby state.

According to an embodiment, when the operation state of the second communication scheme is determined to be a standby state (e.g., "Yes" in operation 705), the electronic device (e.g., the sub-processor 123 or the first processor 400) may, in operation 703, match the impedance of at least one antenna associated with at least one of the first communication scheme or the second communication scheme, based on the operation state of the first communication scheme. For example, when both the first communication scheme and the second communication scheme are in a standby state, the first processor 400 may select a first code corresponding to the standby state of the first communication scheme. When the first communication scheme is in a searching state and the second communication scheme is in a standby state, the first processor 400 may select a second code corresponding to the searching state of the first communication scheme. For example, the first processor 400 may control at least one of a tuner or a switch of each of at least one antenna associated with at least one of the first communication scheme and the second communication scheme so as to match the impedance of the at least one antenna, based on a tuning code corresponding to the operation state of the first communication scheme.

According to an embodiment, when the operation state of the second communication scheme is determined not to be a standby state (e.g., "No" in operation 705), the electronic device (e.g., the sub-processor 123 or the first processor 400) may, in operation 707, match the impedance of at least one antenna associated with at least one of the first communication scheme and the second communication scheme, based on the second communication scheme. For example, when the first communication scheme is in a standby or searching state and the second communication scheme is in a configured state, the first processor 400 may select a fourth code corresponding to the wireless LAN. For example, when the first communication scheme is in a standby or searching state and the second communication scheme is in an active state, the first processor 400 may select a fourth code corresponding to the wireless LAN. For example, the first processor 400 may control at least one of a tuner or a switch of each of at least one antenna associated with at least one of the first communication scheme and the second communication scheme so as to match the impedance of the at least one antenna, based on a tuning code corresponding to the second communication scheme.

According to an embodiment, when the first communication scheme is in a searching state and the second communication scheme is in a configured or active state, the first processor 400 may also select a second code corresponding to the searching state of the first communication scheme.

According to an embodiment, the electronic device 101 may subdivide the tuning code corresponding to the second communication scheme according to the operation state of the second communication scheme. For example, the tuning code corresponding to the second communication scheme may include at least one of a fourth code corresponding to the active state, a fifth code corresponding to the standby state, or a sixth code corresponding to the configured state.

According to an embodiment, a method of operating an electronic device (e.g., the electronic device 101 shown in FIGS. 1, 2A, 2B, 3A, 3B, 4A, or 4B), which includes an application processor (e.g., the main processor 121 of FIG. 1 or the second processor 410 of FIG. 4A or 4B) that supports cellular communication via a first antenna (e.g., the second antenna (A2) of FIGS. 2A, 2B, 3A, or 3B), and a communication processor (e.g., the sub-processor 123 of FIG. 1 or the first processor 400 of FIG. 4A or 4B) that supports wireless LAN communication via a second antenna (e.g., the third antenna (A3) of FIGS. 2A, 2B, 3A, or 3B), may include identifying, by the communication processor, an operation state of the cellular communication and an operation state of the wireless LAN communication when both the cellular communication and the wireless LAN communication are activated. According to an embodiment, the method of operating the electronic device may include matching, by the communication processor, an impedance of at least one of the first antenna or the second antenna, based on the operation state of the cellular communication and the operation state of the wireless LAN communication.

According to an embodiment, the operation state of the wireless LAN communication may be obtained by the communication processor from the application processor.

According to an embodiment, the matching of the impedance may include selecting, by the communication processor, a tuning code, based on the operation state of the cellular communication and the operation state of the wireless LAN communication. According to an embodiment, the matching of the impedance may include matching an impedance of at least one of the first antenna and the second antenna, based on the tuning code.

According to an embodiment, the selecting of the tuning code may include selecting a tuning code corresponding to the cellular communication when both the cellular communication and the wireless LAN communication are in a standby state.

According to an embodiment, the selecting of the tuning code may include selecting a tuning code corresponding to the wireless LAN communication in case that the cellular communication is in a standby state and the electronic device is connected to an access point (AP) through the wireless LAN communication but has not performed data communication yet.

According to an embodiment, the selecting of the tuning code may include selecting a tuning code corresponding to the wireless LAN communication in case that the cellular communication is in a searching state and the electronic device is connected to an AP through the wireless LAN communication but has not performed data communication yet.

According to an embodiment, the selecting of the tuning code may include selecting a tuning code corresponding to the wireless LAN communication in case that the cellular communication is in a searching state and the electronic device performs data communication based on the wireless LAN communication.

According to an embodiment, the selecting of the tuning code may include selecting a tuning code corresponding to the wireless LAN communication in case that the cellular communication is in a standby state and the electronic device performs data communication based on the wireless LAN communication.

According to an embodiment, the selecting of the tuning code may include selecting a tuning code corresponding to the cellular communication in case that the electronic device performs data communication based on the cellular communication.

The embodiments of the disclosure described in the specification and illustrated in the drawings are merely examples provided to facilitate understanding of the technical features of the disclosure and are not intended to limit the scope of the disclosure. Therefore, the scope of the disclosure should be construed to include not only the embodiments disclosed herein but also all modifications and variations derived from the technical spirit of the disclosure.

## Claims

1. An electronic device (101) comprising:
a first antenna;
a second antenna;
a communication processor (123 or 400) configured to support cellular communication in a designated frequency band via the first antenna;
an application processor (121 or 410) configured to support wireless LAN communication in at least a portion of the designated frequency band via the second antenna; and
a memory operatively connected to the communication processor (123 or 400) and the application processor (121 or 410),
wherein the memory is configured to store instructions that, when executed by at least one of the communication processor (123 or 400) or the application processor (121 or 410), cause the electronic device (101) to:
in case that the cellular communication and the wireless LAN communication are activated, identify an operation state of the cellular communication and an operation state of the wireless LAN communication; and
based on the operation state of the cellular communication and the operation state of the wireless LAN communication, match an impedance of at least one of the first antenna or the second antenna.

2. The electronic device of claim 1, wherein the first antenna and the second antenna are disposed within a physically designated distance.

3. The electronic device of one of claims 1 to 2, wherein the memory comprises instructions that, when executed by at least one of the communication processor (123 or 400) or the application processor (121 or 410), cause the electronic device (101) to:
select a tuning code, based on the operation state of the cellular communication and the operation state of the wireless LAN communication; and
based on the tuning code, match an impedance of at least one of the first antenna or the second antenna.

4. The electronic device of one of claims 1 to 3, wherein the memory comprises instructions that, when executed by at least one of the communication processor (123 or 400) or the application processor (121 or 410), cause the electronic device (101) to, in case that the cellular communication and the wireless LAN communication are in a standby state, select a tuning code corresponding to the cellular communication.

5. The electronic device of one of claims 1 to 4, wherein the memory comprises instructions that, when executed by at least one of the communication processor (123 or 400) or the application processor (121 or 410), cause the electronic device (101) to, in case that the cellular communication is in a standby state and the electronic device is connected to an access point (AP) through the wireless LAN communication but has not performed data communication yet, select a tuning code corresponding to the wireless LAN communication.

6. The electronic device of one of claims 1 to 5, wherein the memory comprises instructions that, when executed by at least one of the communication processor (123 or 400) or the application processor (121 or 410), cause the electronic device (101) to, in case that the cellular communication is in a searching state and the electronic device performs data communication based on the wireless LAN communication, select a tuning code corresponding to the wireless LAN communication.

7. The electronic device of one of claims 1 to 5, wherein the memory comprises instructions that, when executed by at least one of the communication processor (123 or 400) or the application processor (121 or 410), cause the electronic device (101) to, in case that the cellular communication is in a standby state and the electronic device performs data communication based on the wireless LAN communication, select a tuning code corresponding to the wireless LAN communication.

8. The electronic device of one of claims 1 to 7, wherein the memory comprises instructions that, when executed by at least one of the communication processor (123 or 400) or the application processor (121 or 410), cause the electronic device (101) to, in case that the electronic device performs data communication based on the cellular communication, select a tuning code corresponding to the cellular communication.

9. A method of operating an electronic device (101) comprising an application processor configured to support cellular communication via a first antenna and a communication processor configured to support wireless LAN communication via a second antenna,
wherein the method comprises:
in case that the cellular communication and the wireless LAN communication are activated, identifying, by the communication processor, an operation state of the cellular communication and an operation state of the wireless LAN communication; and
based on the operation state of the cellular communication and the operation state of the wireless LAN communication, matching, by the communication processor, an impedance of at least one of the first antenna or the second antenna.

10. The method of claim 9, wherein the matching of the impedance comprises:
selecting a tuning code, based on the operation state of the cellular communication and the operation state of the wireless LAN communication; and
based on the tuning code, matching an impedance of at least one of the first antenna or the second antenna.

11. The method of one of claims 9 to 10, wherein the selecting of the tuning code comprises, in case the cellular communication and the wireless LAN communication are in a standby state, selecting a tuning code corresponding to the cellular communication.

12. The method of one of claims 9 to 11, wherein the selecting of the tuning code comprises, in case that the cellular communication is in a standby state and the electronic device is connected to an access point (AP) through the wireless LAN communication but has not performed data communication yet, selecting a tuning code corresponding to the wireless LAN communication.

13. The method of one of claims 9 to 11, wherein the selecting of the tuning code comprises, in case that the cellular communication is in a searching state and the electronic device is connected to an AP through the wireless LAN communication but has not performed data communication yet, selecting a tuning code corresponding to the wireless LAN communication.

14. The method of one of claims 9 to 13, wherein the selecting of the tuning code comprises, in case that the cellular communication is in a searching state and the electronic device performs data communication based on the wireless LAN communication, selecting a tuning code corresponding to the wireless LAN communication.

15. The method of one of claims 9 to 13, wherein the selecting of the tuning code comprises, in case that the cellular communication is in a standby state and the electronic device performs data communication based on the wireless LAN communication, selecting a tuning code corresponding to the wireless LAN communication.
